# EUROPÄISCHE PATENTANMELDUNG

(11) **EP 3 547 797 A1**
(43) Veröffentlichungstag der Anmeldung: **02.10.2019**
(21) Anmeldenummer: 18164114.3
(22) Anmeldetag: 27.03.2018
(51) Int. Cl.: H05B 3/82, A01K 61/13

(54) **SCHIFF MIT EINER VORRICHTUNG ZUM ABTÖTEN SEPARIERTER UND GESAMMELTER FISCHPARASITEN**

(71) Anmelder: Bitunamel Feldmann GmbH, 23554 Lübeck (DE)
(72) Erfinder: Die Erfindernennung liegt noch nicht vor
(74) Vertreter: Patentanwälte Vollmann Hemmer Lindfeld Partnerschaft mbB

(57) **Zusammenfassung**

Die vorliegende Offenbarung betrifft ein Schiff (1) mit einer Vorrichtung (3) zum Abtöten separierter und gesammelter Fischparasiten, wobei die Vorrichtung (3)
- ein Behältnis (9), das eine nach oben offene oder öffenbare Öffnung (11) hat und dazu ausgestaltet ist, ein Tauchbad (13) zu beinhalten,
- einen mit separierten Fischparasiten befüllbaren und wasserdurchlässigen Filtersack (5), und
- einen Kran (7) zum Verschwenken und Eintauchen des mit separierten Fischparasiten gefüllten Filtersacks (5) durch die obere Öffnung (11) des Behältnisses (9) in ein darin enthaltenes Tauchbad (13) aufweist,
wobei die Vorrichtung (3) ferner ein Heizelement (15) im oder am Behältnis (9) aufweist, wobei das Heizelement (15) dazu ausgestaltet ist, das Tauchbad (13) auf eine Temperatur zu erhitzen, die die Fischparasiten nicht überleben.

## Beschreibung

Die vorliegende Offenbarung betrifft ein Schiff mit einer Vorrichtung zum Abtöten separierter und gesammelter Fischparasiten, ein Verfahren zum Abtöten von Fischparasiten und eine Verwendung eines an Bord eines Schiffes befindlichen heizbaren Behältnisses zum Abtöten separierter und gesammelter Fischparasiten.

Fischfarmen, insbesondere Lachsfarmen, haben mit dem Problem zu kämpfen, dass sich Parasiten wie etwa die sogenannte Lachslaus (z.B. lepeophtheirus salmonis), auf den Fischen ansiedeln und die Gesundheit der Tiere beeinträchtigen. Beispielsweise verursacht die Lachslaus jährliche Schäden in Millionenhöhe. Die Lachslaus ist ein Kleinkrebs, welcher sich von außen am Fisch als Wirt festsetzt und sich von Köperschleim, Haut und Blut des Wirtsfisches ernährt. Auch andere Salmonide wie etwa die Meerforelle (salmo trutta) oder Regenbogenforelle (oncorhynchus mykiss) können von der Lachslaus befallen werden.

Im Stand der Technik sind Verfahren bekannt, die Parasiten von den Fischen zu separieren. Beispielsweise gibt es sogenannte Hydrolyser-Verfahren, bei denen eine starke Wasserströmung erzeugt wird, die ähnlich der natürlichen Flussumgebung des Lachses die Parasiten mechanisch vom Fisch abspült. Die Lachse werden dazu in eine an Bord eines Schiffes befindliche Hydrolyser-Anlage aus einem Zuchtkäfig der Fischfarm gesaugt, von Parasiten gereinigt und anschließend zurück in den Zuchtkäfig geleitet.

Die WO 2011/099865 beschreibt in diesem Zusammenhang ein Abstreifelement mit rauer Oberfläche, an der vorbeischwimmende Fische ihre Parasiten abstreifen können. Die EP 2 837 284 A1 beschreibt ein Abtrennen der Fischparasiten vom Fisch mittels eines elektrischen Feldes.

Mechanisch oder elektrisch von den Fischen separierte Parasiten leben allerdings noch und müssen abgetötet werden, damit sie nicht wieder Fische befallen und somit Schaden anrichten können. Dies geschieht üblicherweise mittels einer Wasserstoffperoxid-Lösung, in welche die separierten Parasiten zur Abtötung eingetaucht werden. Die Wasserstoffperoxid-Lösung ist jedoch relativ kostenintensiv, greift chemisch das Filtersackmaterial an und erfordert hohe Sicherheitsmaßnahmen für die Anwendungspersonen und den Umweltschutz.

Bei dem hierin offenbarten Schiff und Verfahren ist dagegen die Tötung der separierten und gesammelten Fischparasiten kostengünstiger, materialschonender und nicht mit hohen Sicherheitsmaßnahmen für die Anwendungspersonen und den Umweltschutz verbunden.

Gemäß einem ersten Aspekt der vorliegenden Offenbarung wird ein Schiff bereitgestellt mit einer Vorrichtung zum Abtöten separierter und gesammelter Fischparasiten, wobei die Vorrichtung
- ein Behältnis, das eine nach oben offene oder öffenbare Öffnung hat und dazu ausgestaltet ist, ein Tauchbad zu beinhalten,
- einen mit separierten Fischparasiten befüllbaren und wasserdurchlässigen Filtersack, und
- einen Kran zum Verschwenken und Eintauchen des mit separierten Fischparasiten gefüllten Filtersacks durch die obere Öffnung des Behältnisses in ein darin enthaltenes Tauchbad aufweist,
wobei die Vorrichtung ferner ein Heizelement im oder am Behältnis aufweist, wobei das Heizelement dazu ausgestaltet ist, das Tauchbad auf eine Temperatur zu erhitzen, die die Fischparasiten nicht überleben.

Beispielweise erstarren und sterben die Fischparasiten oberhalb einer Temperatur von 30 °C. Das Heizelement ist daher vorzugsweise dazu ausgestaltet, das Tauchbad auf eine Temperatur oberhalb von 30 °C zu erhitzen. Ein chemischer Zusatz ist für das Tauchbad, das vorzugsweise Meerwasser enthalten kann, nicht notwendig. Das Tauchbad kann etwa ein Volumen von 1000 Litern oder mehr aufweisen, sodass mit einem Eintauchvorgang ein Volumen von 1 m³ oder mehr separierter und gesammelter Fischparasiten abgetötet werden kann. Die oberseitige Öffnung des Behältnisses kann dazu etwa 1 m² oder mehr betragen.

Optional kann die Vorrichtung auf einem Außendeck des Schiffes angeordnet sein. Auf dem Außendeck kann ein auch für andere Zwecke verwendbarer Kran zum Verschwenken und Eintauchen des mit separierten Fischparasiten gefüllten Filtersacks genutzt werden.

Optional kann das Heizelement zumindest teilweise in einem unteren Bereich des Behältnisses unterhalb eines wasserdurchlässigen Abstandsmittels angeordnet sein, wobei der Filtersack innerhalb des Behältnisses von oben auf dem Abstandsmittel absetzbar ist. Das Abstandsmittel kann beispielweise Gitterstäbe aufweisen oder als Gitter bzw. Lochblech ausgestaltet sein. Dadurch wird ein direkter Kontakt zwischen dem Filtersack und dem Heizelement vermieden. Dadurch kann sich zum einen der Filtersack an Heizelement, das beispielsweise eine Heizspirale aufweisen kann, nicht verhaken und ist zudem vor direkter Hitzeeinwirkung des Heizelements geschützt, da das Heizelement zumindest zeitweise sehr viel heißer sein kann als das Tauchbad.

Optional kann das Heizelement elektrisch und/oder über einen Kühlwasserrücklauf aus einem Schiffsmotor heizbar sein. An Bord des Schiffes über einen Generator oder eine Batterie bereitgestellte elektrische Energie kann zum Aufheizen des Tauchbads genutzt werden. Alternativ oder zusätzlich kann Abwärme aus einen Kühlwasserrücklauf eines Schiffsmotors über das Heizelement auf das Tauchbad übertragen werden. Eine Wärmeübertragung kann mittels eines Wärmetauschers oder über eine direkte Leitungsführung des Kühlwasserrücklaufs durch das Behältnis erzielt werden. Ein elektrisches Heizelement kann auch zusätzlich und ergänzend zu einer Wärmeübertragung aus Abwärme eines Kühlwasserrücklaufs eines Schiffsmotors vorgesehen sein. Eine oder mehrere Wandungen des Behältnisses können selbst zumindest abschnittsweise als Heizelement dienen oder zumindest abschnittsweise Wärme eines von außen in thermischem Kontakt mit der oder den Wandungen stehenden Heizelement übertragen. Optional können eine oder mehrere Wandungen des Behältnisses zumindest abschnittsweise mittels Induktion aufgeheizt werden.

Optional kann das Behältnis eine polyedrische, vorzugsweise quaderförmige, Gestalt haben. Dadurch kann das Behältnis gegenüber einer zylindrischen Form günstiger hergestellt werden und platzsparender an Bord eines Schiffes positioniert werden.

Optional kann das Behältnis doppelwandig ausgestaltet sein. Hierdurch kann eine Isolationsschicht, wie etwa Luft, zwischen den Wandungen vorgesehen werden, um den Energieverbrauch für das Aufheizen und Warmhalten des Tauchbads zu minimieren.

Optional können die Innenflächen des Behältnisses zumindest abschnittsweise Edelstahl aufweisen. Dadurch sind die Innenflächen leicht zu reinigen und sauber zu halten.

Gemäß einem zweiten Aspekt der vorliegenden Offenbarung wird ein Verfahren zum Abtöten von Fischparasiten bereitgestellt mit den folgenden Schritten:
- Separieren von Fischparasiten,
- Befüllen eines wasserdurchlässigen Filtersacks mit den separierten Fischparasiten,
- Eintauchen des mit den separierten Fischparasiten gefüllten Filtersacks von oben in ein mit einem Tauchbad gefülltes Behältnis, und
- Erhitzen des Tauchbads auf eine Temperatur, beispielsweise oberhalb von 30 °C, die die Fischparasiten nicht überleben.

Optional kann der mit den separierten Fischparasiten gefüllte Filtersack für mindestens fünf bis acht Stunden im Tauchbad bei 30 °C eingetaucht werden, nach denen sämtliche Fischparasiten mit hoher Wahrscheinlichkeit abgetötet sind. Die Eintauchdauer kann bei einer höheren Temperatur des Tauchbads entsprechend verkürzt werden. Beispielweise bei einer Temperatur des Tauchbads von 60 °C können bereits weniger als fünf Stunden Eintauchdauer ausreichen. Da sich mit dem Eintauchen des mit den separierten Fischparasiten gefüllten Filtersacks in das erhitzte Tauchbad die Temperatur des Tauchbads absenken kann, kann das Tauchbad zunächst auf eine entsprechend höhere Temperatur erhitzt werden, damit die Temperatur durch den Eintauchvorgang nicht unterhalb einer Mindesttemperatur von beispielsweise 30 °C fällt. Wird mit dem Erhitzen erst während oder nach dem Eintauchen begonnen, so ist die Eintauchdauer vom Zeitpunkt an zu messen, ab dem das Tauchbad eine Mindesttemperatur von beispielsweise 30 °C erreicht hat. Mittels eines an ein Thermometer gekoppelten Zeitmessers kann die Eintauchdauer bzw. ein Beendigungssignal des Tauchvorgangs und/oder des Heizvorgangs abgegeben werden.

Optional können mit dem Befüllen des Filtersacks die separierten Fischparasiten gesammelt werden. Dies kann einen Umfüllschritt einsparen. Die sich nach dem Separieren der Fischparasiten von den Fischen in einem an Bord des Schiffes befindlichen Becken schwimmenden separierten Fischparasiten werden mit dem Filtersack aus dem Becken gefischt und damit gesammelt.

Optional kann der Schritt des Erhitzens vor, nach und/oder während eines der Schritte des Separierens, Befüllens und/oder Eintauchens durchgeführt werden. Ein Vorheizen kann Zeit für den Tauchvorgang sparen, wogegen ein Heizen während oder nach dem Eintauchvorgang gegenüber einem Vorheizen Energie sparen kann.

Optional können sämtliche Schritte des Verfahrens an Bord eines Schiffes durchgeführt werden. Das Schiff kann dann nämlich an einen Zuchtkäfig einer Hochseefischfarm fahren und vor Ort sowohl das Separieren der Fischparasiten von den Fischen, beispielsweise mittels eines Hydrolyser-Verfahrens, durchführen als auch die separierten und gesammelten Fischparasiten abtöten.

Optional kann das Erhitzen mittels eines Heizelements elektrisch und/oder über einen Kühlwasserrücklauf aus einem Schiffsmotor durchgeführt werden. Je nachdem, ob elektrische Energie aus einem Generator bzw. einer Batterie zur Verfügung steht und/oder thermische Energie aus der Abwärme eines Schiffsmotors, kann das Tauchbad mit elektrischer und/oder thermischer Energie geheizt werden.

Gemäß einem dritten Aspekt der vorliegenden Offenbarung wird eine Verwendung eines an Bord eines Schiffes befindlichen heizbaren Behältnisses bereitgestellt zum Abtöten separierter und gesammelter Fischparasiten mittels Eintauchen eines mit separierten Fischparasiten gefüllten und wasserdurchlässigen Filtersacks von oben in das Behältnis und Erhitzen eines in dem Behältnis befindlichen Tauchbads auf eine Temperatur, die die Fischparasiten nicht überleben.

Optional kann das Eintauchen mittels eines an Bord des Schiffes befindlichen Krans durchgeführt werden. Es kann also an Bord eines Schiffes zumindest teilweise vorhandenes und für andere Zwecke bestimmtes Equipment wie etwa ein Be- und Entladekran genutzt werden, um die separierten und gesammelten Fischparasiten in dem Tauchbad thermisch abzutöten.

Die Offenbarung ist nachfolgend anhand des in der Zeichnung dargestellten Ausführungsbeispiels näher erläutert. Es zeigt:

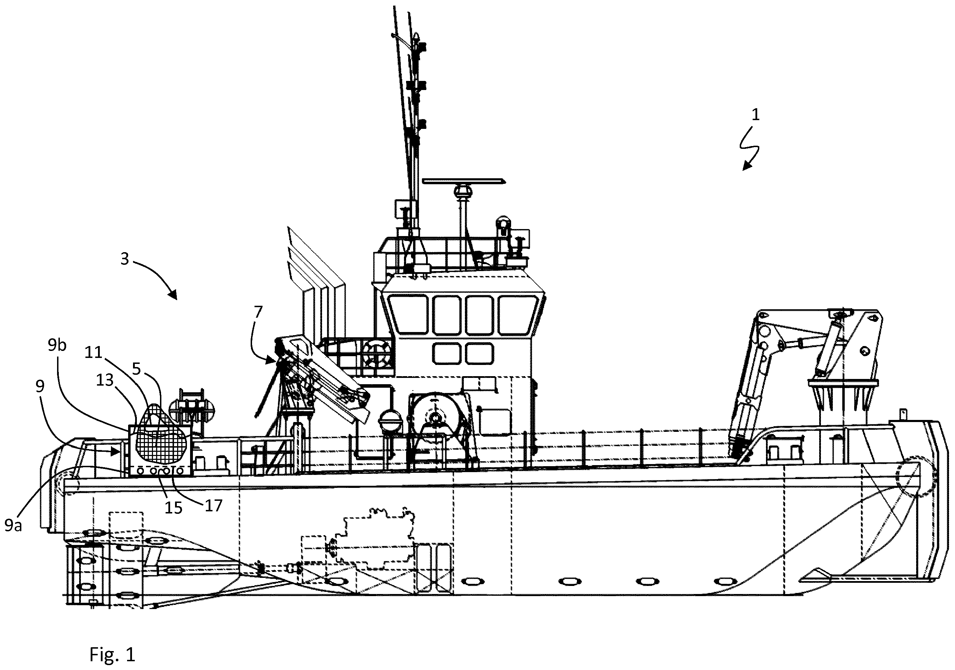

Fig. 1 eine Seitenansicht auf ein Ausführungsbeispiel eines hierin offenbarten Schiffes.

Figur 1 zeigt ein Schiff 1 mit einer Vorrichtung 3 zum Abtöten separierter und gesammelter Fischparasiten. Die Fischparasiten sind in einem Filtersack 5 gesammelt, der an einen Kran 7 hängen und somit positioniert werden kann. Der Filtersack 5 ist wasserdurchlässig, aber engmaschig genug, damit darin gesammelte Fischparasiten daraus nicht entweichen können. Der Kran 7 kann den mit Fischparasiten gefüllten Filtersack 5 über ein auf dem Außendeck des Schiffes 1 angeordnetes Behältnis 9 verschwenken und dort wie gezeigt hinein ablassen. Das Behältnis 9 hat dazu eine obere Öffnung 11 und enthält ein Tauchbad 13 aus Meerwasser. In einem unteren Bereich 9a des Behältnisses 9 erstreckt sich ein elektrisches Heizelement 15 mäanderförmig durch das Tauchbad 13, um das Tauchbad 13 auf eine Temperatur oberhalb von 30 °C erhitzen zu können, die die Fischparasiten nicht überleben. Ein nicht gezeigtes Umwälzmittel wie etwa eine Pumpe oder ein Laufrad kann dafür sorgen, dass die Temperatur im gesamten Tauchbad 13 im Wesentlichen homogen verteilt ist.

Über dem Heizelement 15 ist ein Abstandsmittel 17 in Form eines Lochblechs angeordnet, das sich im Wesentlichen parallel zur oberen Öffnung 11 vollständig durch das Tauchbad 13 erstreckt und den unteren Bereich 9a des Behältnisses 9 von einem oberen Bereich 9b des Behältnisses 9 wasserdurchlässig trennt. Der Filtersack 5 kann so in den oberen Bereich 9b des Behältnisses 9 zum Eintauchen in das Tauchbad 13 mittels des Krans 7 abgesenkt werden, ohne dass der Filtersack 5 in direkten Kontakt mit dem Heizelement 15 kommt. Das Abstandsmittel 17 in Form des horizontalen Lochblechs hält dazu einen Abstand zwischen dem Filtersack 5 und dem Heizelement 15, da der Filtersack 5 beim Eintauchen auf dem Abstandsmittel 17 zu liegen kommt. Das Abstandsmittel 17 kann dazu drei oder mehr Beine aufweisen, auf dem es auf dem Boden des Behältnisses 9 steht. Dies ist vorteilhaft, um das Behältnis 9 nebst Heizelement 15 reinigen, entkalken, entsalzen und/oder anderweitig warten zu können, da das Abstandsmittel 17 dann nach oben durch die Öffnung 11 entnehmbar ist. Alternativ oder zusätzlich dazu kann das Abstandsmittel 17 an mindestens zwei sich gegenüberliegenden Innenseiten des Behältnisses 9 fest oder lösbar verschraubt, verschweißt und/oder an diesen eingehakt sein.

Sobald der mit den separierten Fischparasiten gefüllte Filtersack 5 für fünf bis acht Stunden im Tauchbad 13 bei 30 °C eingetaucht war, sind sämtliche Fischparasiten mit hoher Wahrscheinlichkeit abgetötet. Der Filtersack 5 kann dann wieder mittels des Krans 7 aus dem Tauchbad 13 herausgezogen werden und entsorgt oder als Fischfutter verwendet werden. Die Eintauchdauer kann bei einer höheren Temperatur des Tauchbads 13 entsprechend verkürzt werden. Beispielweise bei einer Temperatur des Tauchbads 13 von 60 °C können bereits weniger als fünf Stunden Eintauchdauer ausreichen.

Das in Fig. 1 gezeigte Schiff 1 und damit angewendete Verfahren zum Abtöten separierter und gesammelter Fischparasiten ist gegenüber einer chemischen Abtötung kostengünstiger, materialschonender und nicht mit hohen Sicherheitsmaßnahmen für die Anwendungspersonen und den Umweltschutz verbunden.

Die nummerierten Bezeichnungen der Bauteile oder Bewegungsrichtungen als "erste", "zweite", "dritte" usw. sind hierin rein willkürlich zur Unterscheidung der Bauteile oder Bewegungsrichtungen untereinander gewählt und können beliebig anders gewählt werden. Es ist damit kein Bedeutungsrang verbunden. Eine Bezeichnung eines Bauteils oder technischen Merkmals als "erstes" soll nicht dahingehend missverstanden werden, dass es ein zweites Bauteil oder technisches Merkmal dieser Art geben muss. Außerdem können etwaige Verfahrensschritte, soweit nicht explizit anders erläutert oder zwingend erforderlich, in beliebiger Reihenfolge und/oder zeitlich teilweise oder ganz überlappend durchgeführt werden.

Äquivalente Ausführungsformen der hierin beschriebenen Parameter, Bauteile oder Funktionen, die in Anbetracht dieser Beschreibung einer fachlich versierten Person als offensichtlich erscheinen, seien hierin so erfasst als wären sie explizit beschrieben. Entsprechend soll der Schutzbereich der Ansprüche solche äquivalente Ausführungsformen umfassen. Als optional, vorteilhaft, bevorzugt, erwünscht oder ähnlich bezeichnete "kann"-Merkmale sind als optional zu verstehen und nicht als schutzbereichsbeschränkend.

Die beschriebenen Ausführungsformen sind als illustrative Beispiele zu verstehen und stellen keine abschließende Liste von möglichen Ausführungsformen dar. Jedes Merkmal, das im Rahmen einer Ausführungsform offenbart wurde, kann allein oder in Kombination mit einem oder mehreren anderen Merkmalen verwendet werden, unabhängig davon, in welcher Ausführungsform die Merkmale jeweils beschrieben wurden. Während mindestens ein Ausführungsbeispiel hierin beschrieben und gezeigt ist, seien Abwandlungen und alternative Ausführungsformen, die einer fachmännisch versierten Person in Anbetracht dieser Beschreibung als offensichtlich erscheinen, vom Schutzbereich dieser Offenbarung erfasst. Im Übrigen soll hierin weder der Begriff "aufweisen" zusätzliche andere Merkmale oder Verfahrensschritte ausschließen noch soll "ein" oder "eine" eine Mehrzahl ausschließen.

## Patentansprüche

1. Schiff (1) mit einer Vorrichtung (3) zum Abtöten separierter und gesammelter Fischparasiten, wobei die Vorrichtung (3)
- ein Behältnis (9), das eine nach oben offene oder öffenbare Öffnung (11) hat und dazu ausgestaltet ist, ein Tauchbad (13) zu beinhalten,
- einen mit separierten Fischparasiten befüllbaren und wasserdurchlässigen Filtersack (5), und
- einen Kran (7) zum Verschwenken und Eintauchen des mit separierten Fischparasiten gefüllten Filtersacks (5) durch die obere Öffnung (11) des Behältnisses (9) in ein darin enthaltenes Tauchbad (13) aufweist,
wobei die Vorrichtung (3) ferner ein Heizelement (15) im oder am Behältnis (9) aufweist, wobei das Heizelement (15) dazu ausgestaltet ist, das Tauchbad (13) auf eine Temperatur zu erhitzen, die die Fischparasiten nicht überleben.

2. Schiff (1) nach Anspruch 1, wobei die Vorrichtung (3) auf einem Außendeck des Schiffes (1) angeordnet ist.

3. Schiff (1) nach Anspruch 1 oder 2, wobei das Heizelement (15) zumindest teilweise in einem unteren Bereich (9a) des Behältnisses (9) unterhalb eines wasserdurchlässigen Abstandsmittels (17) angeordnet ist, wobei der Filtersack (5) innerhalb des Behältnisses (9) von oben auf dem Abstandsmittel (17) absetzbar ist.

4. Schiff (1) nach einem der vorhergehenden Ansprüche, wobei das Heizelement (15) elektrisch und/oder über einen Kühlwasserrücklauf aus einem Schiffsmotor heizbar ist.

5. Schiff (1) nach einem der vorhergehenden Ansprüche, wobei das Behältnis (9) eine polyedrische, vorzugsweise quaderförmige, Gestalt hat.

6. Schiff (1) nach einem der vorhergehenden Ansprüche, wobei das Behältnis (9) doppelwandig ausgestaltet ist.

7. Schiff (1) nach einem der vorhergehenden Ansprüche, wobei die Innenflächen des Behältnisses (9) zumindest abschnittsweise Edelstahl aufweisen.

8. Verfahren zum Abtöten von Fischparasiten mit den folgenden Schritten:
- Separieren von Fischparasiten,
- Befüllen eines wasserdurchlässigen Filtersacks (5) mit den separierten Fischparasiten,
- Eintauchen des mit den separierten Fischparasiten gefüllten Filtersacks (5) von oben in ein mit einem Tauchbad (13) gefülltes Behältnis (9), und
- Erhitzen des Tauchbads (13) auf eine Temperatur, die die Fischparasiten nicht überleben.

9. Verfahren nach Anspruch 8, wobei mit dem Befüllen des Filtersacks (5) die separierten Fischparasiten gesammelt werden.

10. Verfahren nach Anspruch 8 oder 9, wobei der Schritt des Erhitzens vor, nach und/oder während eines der Schritte des Separierens, Befüllens und/oder Eintauchens durchgeführt wird.

11. Verfahren nach Anspruch einem der Ansprüche 8 bis 10, wobei sämtliche Schritte des Verfahrens an Bord eines Schiffes (1) durchgeführt werden.

12. Verfahren nach Anspruch einem der Ansprüche 8 bis 11, wobei sämtliche Schritte des Verfahrens in einer Hochseefischfarm durchgeführt werden.

13. Verfahren nach Anspruch einem der Ansprüche 8 bis 12, wobei das Erhitzen mittels eines Heizelements (15) elektrisch und/oder über einen Kühlwasserrücklauf aus einem Schiffsmotor durchgeführt wird.

14. Verwendung eines an Bord eines Schiffes (1) befindlichen heizbaren Behältnisses (9) zum Abtöten separierter und gesammelter Fischparasiten mittels Eintauchen eines mit separierten Fischparasiten gefüllten und wasserdurchlässigen Filtersacks (5) von oben in das Behältnis (9) und Erhitzen eines in dem Behältnis (9) befindlichen Tauchbads (13) auf eine Temperatur, die die Fischparasiten nicht überleben.

15. Verwendung nach Anspruch 14, wobei das Eintauchen mittels eines an Bord des Schiffes (1) befindlichen Krans (7) durchgeführt wird.
